(19) Europäisches Patentamt
European Patent Office
Office européen des brevets

(11) **EP 3 477 211 B1**

(12) **FASCICULE DE BREVET EUROPEEN**

(45) Date de publication et mention
de la délivrance du brevet:
**01.07.2020 Bulletin 2020/27**

(21) Numéro de dépôt: **18202066.9**

(22) Date de dépôt: **23.10.2018**

(51) Int Cl.:
*F24D 17/00* *(2006.01)*          *F28D 20/02* *(2006.01)*
*C09K 5/06* *(2006.01)*          *F28D 7/16* *(2006.01)*
*F28F 1/32* *(2006.01)*          *F28D 20/00* *(2006.01)*
*F28D 7/02* *(2006.01)*

(54) **DISPOSITIF DE RÉCHAUFFAGE D'UN FLUIDE CIRCULANT DANS UNE CANALISATION ET INSTALLATION THERMIQUE COMPORTANT UN TEL DISPOSITIF**

VORRICHTUNG ZUM WIEDERAUFHEIZEN EINER IN EINER KANALISATION FLIESSENDEN FLÜSSIGKEIT, UND THERMISCHE ANLAGE, DIE EINE SOLCHE VORRICHTUNG UMFASST

DEVICE FOR HEATING A FLUID FLOWING IN A PIPE AND THERMAL INSTALLATION COMPRISING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2017 FR 1760014**

(43) Date de publication de la demande:
**01.05.2019 Bulletin 2019/18**

(73) Titulaire: **Commissariat à l'Energie Atomique et aux Energies Alternatives
75015 Paris (FR)**

(72) Inventeurs:
• **FRANCOIS, Eric
73470 Novalaise (FR)**

• **LASFARGUES, Mathieu
73000 Jacob-Bellecombette (FR)**

(74) Mandataire: **Cabinet Camus Lebkiri
25 rue de Maubeuge
75009 Paris (FR)**

(56) Documents cités:
**WO-A1-98/34073          WO-A1-2009/065182
WO-A1-2014/121335          CA-A1- 2 887 916
DE-A1-102009 013 320          FR-A1- 3 043 187
GB-A- 2 495 938          GB-A- 2 516 953
US-A- 5 072 717**

**Description**

**DOMAINE TECHNIQUE**

La présente invention concerne un dispositif de réchauffage permettant de chauffer un fluide circulant dans des canalisations reliant un réservoir de fluide et un point d'utilisation. L'invention concerne également une installation thermique adaptée à un bâtiment et comportant au moins un tel dispositif de réchauffage.

L'invention trouve des applications dans différents domaines techniques et notamment dans le domaine de l'industrie, par exemple pour le stockage solaire ou le maintien en température du circuit primaire d'une centrale solaire à concentration, et dans le domaine du bâtiment et, en particulier de la plomberie, par exemple pour chauffer le fluide présent dans les canalisations avant d'arriver au point d'utilisation.

**ETAT DE LA TECHNIQUE**

Il est connu que les installations thermiques comportent des canalisations permettant de raccorder un réservoir de fluide, par exemple de l'eau ou un gaz, à des points d'utilisation.

Dans le domaine industriel, l'installation thermique peut être un circuit primaire d'une centrale solaire à concentration. Ce circuit primaire comporte des canalisations remplies d'un fluide permettant de générer de la valeur qui entraine une turbine produisant de l'électricité. La chaleur générée est généralement stockée dans des sels de nitrate fondus. Un refroidissement du fluide dans les canalisations peut être à l'origine d'une cristallisation de ces sels de nitrate dans lesdites canalisations.

Il est connu de protéger le circuit primaire des centrales solaires à concentration du risque de cristallisation des sels de nitrate, par des systèmes comprenant à la fois des traceurs électriques et des réservoirs constituant un stock d'énergie. Cependant, ces systèmes induisent une augmentation des déperditions.

Dans le domaine du bâtiment, l'installation thermique peut être une installation sanitaire, dans laquelle le réservoir d'eau est relié à des points de puisage par des canalisations. Classiquement, un réseau de distribution d'eau alimente un bâtiment en eau froide. Cette eau est ensuite redistribuée vers les différents appartements ou pièces du bâtiment par une ou plusieurs installations sanitaires qui assurent également le chauffage de l'eau.

Chaque installation sanitaire comporte généralement deux circuits d'eau : un circuit d'eau froide et un circuit d'eau chaude. Le circuit d'eau froide et le circuit d'eau chaude comportent chacun un ensemble de canalisations distinct et souvent parallèle l'un à l'autre. Ainsi, les canalisations du circuit d'eau froide permettent la circulation de l'eau froide du réservoir d'eau jusqu'aux points de puisage, appelés aussi robinets, et les canalisations du circuit d'eau chaude permettent la circulation de l'eau chaude du réservoir d'eau jusqu'aux points de puisage.

Pour permettre la distribution d'une eau courante chauffée, le réservoir d'eau est généralement un chauffe-eau qui assure le chauffage de l'eau provenant du réseau de distribution d'eau avant sa mise en circulation dans le circuit d'eau chaude. Ce chauffe-eau peut être, par exemple, une chaudière instantanée, une chaudière à ballon ou un ballon préparateur ECS (eau chaude sanitaire).

Lors d'un puisage, c'est-à-dire lorsque la ou les manettes d'un robinet - ou point de puisage - sont actionnées, l'eau froide et/ou l'eau chaude, dans un débit respectif permettant d'obtenir la température commandée par les manettes, sont mises en circulation dans leurs canalisations respectives. L'eau chaude circule ainsi du chauffe-eau jusqu'au robinet. Lorsque le puisage de l'eau est terminé, les canalisations des circuits d'eau froide et d'eau chaude restent remplies jusqu'au puisage suivant. Or, l'énergie thermique de l'eau dans les canalisations d'eau chaude se dissipe rapidement entre deux puisages successifs, en particulier lorsque la température ambiante est peu élevée, par exemple inférieure à la température moyenne des logements, qui est de l'ordre de 18°C. Cette dissipation de l'énergie thermique entraine un gaspillage d'eau à chaque puisage car, l'eau chaude s'étant refroidie par rapport au puisage précédent, l'utilisateur a pour habitude de laisser couler l'eau jusqu'à ce que celle-ci atteigne la température commandée. De l'eau inutilisée peut ainsi s'écouler pendant une durée pouvant atteindre plusieurs dizaines de secondes, cette durée dépendant non seulement de la température ambiante, mais également du temps écoulé entre deux puisages et de la configuration de l'installation sanitaire comme, par exemple, l'éloignement entre le réservoir d'eau et le point de puisage.

A une époque où la consommation en eau ne cesse de croître et où les ressources en eau « propre », c'est-à-dire non polluée par les rejets industriels et autres pollutions chimiques, se raréfient, il est nécessaire de limiter le gaspillage d'eau. En effet, des études montrent que la consommation d'eau chaude à une température de 50°C se situe autour de 30 à 40 litres par jour et par personnes dans les pays développés, soit environ 15m$^3$ par an et par personne. Pour éviter le gaspillage engendré par le soutirage de l'eau restée dans les canalisations, des installations sanitaires ont été équipées de pompes de circulation, permanente ou périodique, et d'une boucle d'eau aller/retour reliant le réservoir à l'ensemble des points de puisage. De telles installations sanitaires permettent de maintenir l'eau du circuit d'eau chaude à une température prédéfinie jusqu'au plus près du point de puisage. Cependant, ces installations sanitaires génèrent des dépenses électriques supplémentaires pour le fonctionnement des pompes de circulation. Elles génèrent également des pertes thermiques supplémentaires. Dans le cas d'installations de chauffage par une source d'énergie intermittente, des dispositifs de stockage sensibles ou latents sont connus. Toutefois, ces dispositifs occasionnent des pertes thermiques conséquentes qui diminuent l'efficacité des systèmes.

Les documents WO 98/34073 A1, FR 3 043 187 A1, GB 2 516 953 A, WO 2009/065182 A1 et DE 10 2009 013320 A1 montrent des exemples de dispositifs de réchauffage d'un fluide circulant dans une canalisation avec un matériau à changement de phase déclenché par action thermique de sorte à emmagasiner une énergie thermique captée lors d'une utilisation du fluide et à restituer au fluide, au cours d'une utilisation suivante, l'énergie thermique précédemment emmagasinée. Les dispositifs divulgués par ces documents proposent uniquement un déclenchement thermique, c'est-à-dire un déclenchement qui n'est pas contrôlé par l'utilisateur.

Le document GB 2 495 938 A divulgue un composant pour emmagasiner de l'énergie contenant un matériau à changement de phase pouvant être activé par un moyen d'activation mécanique, par ultrasons ou par un commutateur. Ce document ne prévoit nullement l'utilisation de ce matériau à changement de phase dans une installation thermique pour réchauffer un fluide.

## RESUME DE L'INVENTION

Pour répondre aux problèmes évoqués ci-dessus du risque de cristallisation des sels de nitrate dans une installation thermique industrielle et du gaspillage d'eau entre deux puisages d'une installation sanitaire, le demandeur propose un dispositif, placé en amont du point d'utilisation, pour réchauffer le fluide de la canalisation en utilisant l'énergie thermique procurée par la circulation du fluide chaud lors d'une précédente utilisation.

Selon un premier aspect, l'invention concerne un dispositif de réchauffage d'un fluide circulant dans au moins une canalisation raccordant un point source de fluide à au moins un point d'utilisation dudit fluide. Le dispositif de réchauffage se caractérise par le fait qu'il comporte, en amont du point d'utilisation, au moins un système de stockage comportant un matériau à changement de phase présentant des propriétés de surfusion adaptées à une température d'utilisation du fluide de sorte à emmagasiner une énergie thermique captée lors d'une utilisation du fluide et à restituer au fluide, au cours d'une utilisation suivante, l'énergie thermique précédemment emmagasinée, ledit matériau à changement de phase étant liquide en-dessous d'une température de fusion et se solidifiant très rapidement lors de l'utilisation suivante.

Dans toute la description, on entend par « point source » ou « réservoir » de fluide, tout équipement permettant la production ou le stockage d'une énergie thermique comme, par exemple, un chauffe-eau, une chaudière, un ballon de stockage, etc.

Le dispositif de réchauffage selon l'invention permet de réchauffer, au moment d'un puisage de fluide, le fluide refroidi resté dans les canalisations depuis le puisage précédent. L'utilisateur n'a donc pas besoin de laisser couler le fluide refroidi en attendant que le fluide chauffé dans le point source, ou équipement de stockage ou de production de l'énergie thermique, arrive au point d'utilisation.

Toutes sortes de fluides peuvent être réchauffés par le dispositif de réchauffage de l'invention. Le fluide peut en particulier être de l'eau, notamment lorsque le dispositif de réchauffage de l'invention est mis en oeuvre dans une installation sanitaire, comme décrit par la suite.

Le dispositif de réchauffage selon l'invention comporte un déclencheur apte à faire passer le matériau à changement de phase dans son état de liquide en surfusion à l'état solide. Le déclenchement de la solidification du matériau à changement de phase, c'est-à-dire le passage de l'état liquide en surfusion à l'état solide, est produit par une action (pression, choc, onde, champ) mécanique ou électrique sur le système de stockage.

Ce déclencheur permet de déclencher la solidification du matériau à changement de phase à un instant choisi, par exemple à l'instant où l'utilisateur active l'ouverture du point d'utilisation.

De façon avantageuse, le système de stockage comporte un récipient contenant le matériau à changement de phase, ledit récipient étant configuré de sorte à être en contact thermique avec au moins une canalisation de transport du fluide chaud. Ce contact thermique peut être obtenu, par exemple, en positionnant le récipient autour ou dans le prolongement de la canalisation.

Le dispositif de réchauffage peut comporter en outre une ou plusieurs des caractéristiques suivantes, prises individuellement ou en combinaison :

- le récipient comporte une pluralité de plaques de séparation, disposées sensiblement parallèlement les unes aux autres et formant une pluralité de cavités contenant chacune une portion d'un matériau à changement de phase.

- le matériau à changement de phase contenu dans les cavités (250) est un matériau dopé ou non par des matériaux plus conducteurs thermiquement ou par l'insertion d'une maille ou d'un treillis métallique conducteur.

- les propriétés de surfusion du matériau à changement de phase sont adaptées à la fois à la température d'utilisation du fluide et à la source de chaleur du point source.

- le récipient est monté autour de plusieurs conduits s'étendant longitudinalement au sein du matériau à changement de phase et raccordés chacun sur la canalisation de transport du fluide chaud. On entend par « longitudinalement », dans la longueur du récipient, suivant la même direction que la canalisation d'amenée du fluide.

- le récipient contenant le matériau à changement de phase est thermiquement isolé dans l'environnement extérieur.

- le matériau à changement de phase est un Phosphate de Sodium hydraté.

- il comporte au moins deux systèmes de stockage raccordés en série.

Selon un second aspect, l'invention concerne une installation thermique destinée à équiper un bâtiment, comportant au moins une canalisation de transport d'un fluide et au moins un point d'utilisation dudit fluide. Cette installation comporte au moins un dispositif de réchauffage du fluide tel que défini ci-dessus.

Cette installation présente l'avantage de limiter le gaspillage de fluide ou d'éviter la cristallisation des sels de nitrate sans toutefois entraîner de frais d'énergie supplémentaires.

Avantageusement, chaque point d'utilisation de l'installation, équipé d'un dispositif de réchauffage du fluide, comporte un appareil de limitation de la température du fluide.

Selon certains modes de réalisation, le point d'utilisation comporte un dispositif d'activation du déclencheur.

Selon un ou plusieurs modes de réalisation, le réservoir de fluide est un chauffe-eau ou une chaudière.

Selon certains modes de réalisation, l'installation thermique est une installation sanitaire dans laquelle les points d'utilisation sont des points de puisage utilisés par l'utilisateur pour soutirer de l'eau.

## BREVE DESCRIPTION DES FIGURES

D'autres avantages et caractéristiques de l'invention apparaîtront à la lecture de la description, illustrée par les figures dans lesquelles :

- La figure 1 représente une vue schématique d'une installation sanitaire équipée du dispositif de réchauffage selon l'invention ;

- La figure 2 représente un premier exemple d'un dispositif de réchauffage selon l'invention ;

- La figure 3 représente un deuxième exemple d'un dispositif de réchauffage selon l'invention ;

- La figure 4 représente schématiquement les états de surfusion et de cristallisation d'un matériau à changement de phase particulier ; et

- Les figures 5 et 6 représentent schématiquement des exemples de déclencheurs du dispositif de réchauffage.

## DESCRIPTION DETAILLEE D'AU MOINS UN MODE DE REALISATION

Un exemple de réalisation d'un dispositif de réchauffage d'un fluide circulant dans une canalisation, est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

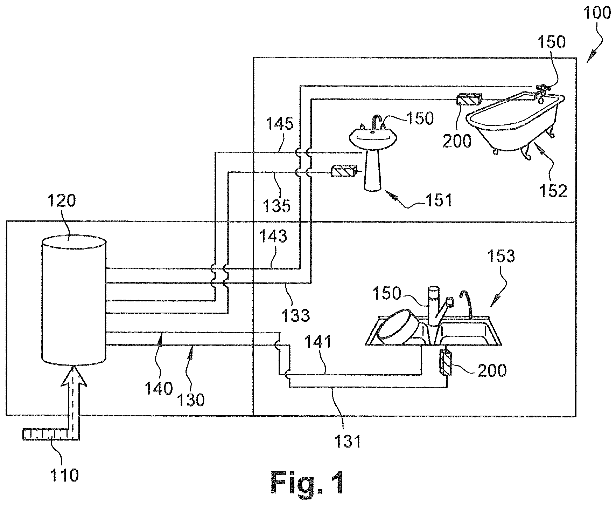

La figure 1 représente un exemple d'une installation thermique 100 équipée de plusieurs dispositifs de réchauffage d'eau selon l'invention. Dans cet exemple, l'installation thermique est une installation sanitaire dans laquelle les points d'utilisation du fluide sont des points de puisage de l'eau et le point source de fluide est un réservoir d'eau. Ce schéma représente un logement alimenté en fluide, en particulier de l'eau potable, par un réseau de distribution représenté par la flèche 110. Ce réseau de distribution 110 alimente en eau froide un réservoir d'eau 120. Ce réservoir d'eau 120 peut être un réservoir privatif, dédié au logement, ou un réservoir commun alimentant plusieurs logements. Ce réservoir d'eau 120 peut être un chauffe-eau tel qu'une chaudière à chauffage instantané ou une chaudière à ballon comme représenté sur la figure 1. Les termes de réservoir et chauffe-eau seront employés indifféremment dans la suite de la description, étant entendu que le réservoir est adapté pour chauffer et/ou contenir de l'eau chaude.

L'installation sanitaire de la figure 1 comporte plusieurs points de puisage 150, ou robinets, comme par exemple celui d'un lavabo 151, celui d'une baignoire 152 ou celui d'un évier de cuisine 153. Chaque point de puisage 150 est raccordé au réservoir 120 par un circuit d'eau froide 140 et un circuit d'eau chaude 130. Chaque circuit d'eau chaude 130 et chaque circuit d'eau froide 140 comporte au moins une canalisation. Par exemple, sur la figure 1, le robinet du lavabo 151 est raccordé au réservoir 120 par une canalisation d'eau chaude 135 et une canalisation d'eau froide 145, le robinet de la baignoire 152 est raccordé au réservoir 120 par une canalisation d'eau chaude 133 et une canalisation d'eau froide 143, le robinet de l'évier 153 est raccordé au réservoir 120 par une canalisation d'eau chaude 131 et une canalisation d'eau froide 141. Un ou plusieurs autres points de puisage peuvent bien entendu être intégrés dans l'installation sanitaire.

Lorsqu'un utilisateur soutire de l'eau chaude à un robinet, l'eau chaude produite par le chauffe-eau 120 circule à travers le circuit d'eau chaude 130 depuis ledit chauffe-eau 120 jusqu'au robinet 150 actionné par l'utilisateur. Lorsque l'utilisateur a soutiré l'eau chaude nécessaire, il ferme le robinet 150. L'eau chaude, présente dans les canalisations du circuit d'eau chaude au moment de la fermeture du robinet, reste dans les canalisations où elle est refroidie sous l'effet d'une température ambiante inférieure à la température de l'eau chaude.

Conformément à l'invention, un dispositif de réchauffage 200 est monté en amont du robinet 150 de façon à chauffer l'eau restée dans les canalisations du circuit d'eau chaude (entre un point de puisage 150 et le réservoir 120) depuis le puisage précédent. Un tel dispositif de réchauffage 200 peut être installé sur une seule ou plusieurs des canalisations du circuit d'eau chaude 130. Dans l'exemple de la figure 1, un dispositif de réchauffage 200 est monté sur chaque canalisation du circuit d'eau chaude 130. Chaque dispositif de réchauffage 200 est monté sur une canalisation du circuit d'eau chaude, de préférence, au plus près du robinet 150 afin de chauffer une quantité maximum d'eau restée dans la canalisation.

Chaque robinet 150 équipé en amont d'un dispositif de réchauffage 200 peut également être équipé d'un appareil thermostatique ou de tout autre appareil permettant de limiter la température de l'eau en sortie dudit robinet.

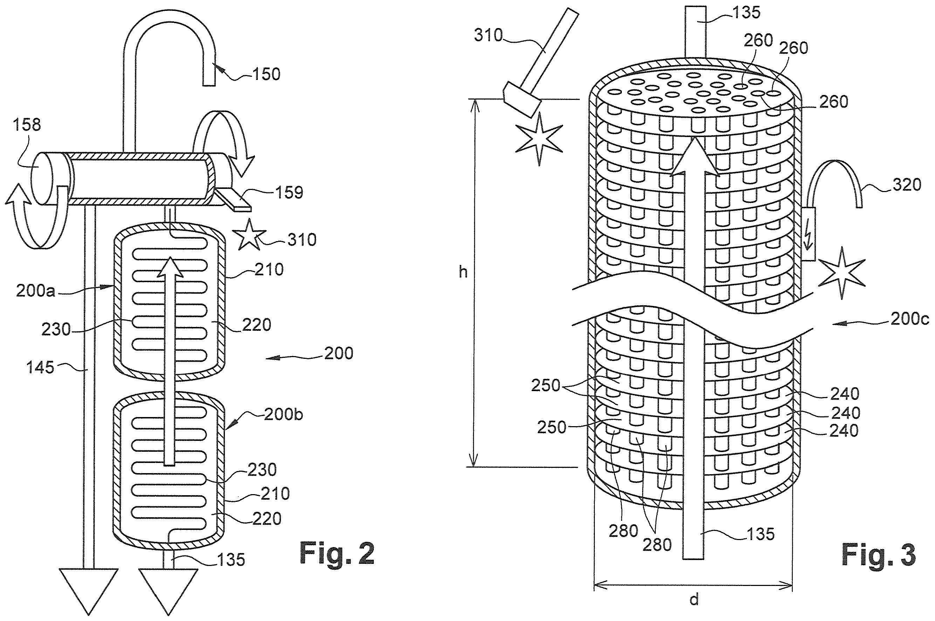

Le dispositif de réchauffage 200 de l'invention comporte au moins un système de stockage d'énergie à matériau à changement de phase 200a monté autour d'une canalisation du circuit d'eau chaude. Un exemple de ce système de stockage d'énergie 200a, appelé plus simplement système de stockage, est représenté sur la figure 2. Dans cet exemple, le système de stockage 200a est placé autour de la canalisation d'eau chaude 135 assurant l'amenée de l'eau chaude au robinet 150, l'eau froide étant amenée au robinet par la canalisation d'eau froide 145 installée de façon plus ou moins parallèle à la canalisation d'eau chaude 135. La canalisation d'eau froide 145 est raccordée à la manette 158 du robinet 150 qui permet, après ouverture, le puisage d'eau froide. La canalisation d'eau chaude 135 est raccordée à la manette 159 du robinet 150 qui permet, après ouverture, le puisage d'eau chaude.

Le système de stockage 200a comporte un matériau à changement de phase 220 dont la particularité est d'emmagasiner l'énergie thermique issue de l'eau chaude circulant dans la canalisation 135 et de restituer cette énergie thermique à l'eau refroidie restée dans la canalisation 135 entre deux puisages. Ce matériau à changement de phase, appelé aussi MCP, est un matériau métastable dont le changement d'état liquide/solide peut être déclenché par une sollicitation extérieure (pression, choc, onde, etc.) Ce MCP a la propriété de pouvoir passer très rapidement d'un état de surfusion (liquide) à un état de cristallisation (solide) à une vitesse qui dépend du matériau et du type de déclenchement utilisé. Le matériau à changement de phase est liquide en-dessous de sa température de fusion et devient solide à une température de nucléation, appelée aussi température de cristallisation. La surfusion cesse à la température de nucléation. Le passage de l'état de surfusion à l'état de cristallisation, appelé solidification, permet de libérer une énergie sous forme thermique.

La libération de l'énergie thermique au moment de la solidification permet de chauffer l'eau restée dans les canalisations. Ce changement d'état peut être provoqué par une sollicitation extérieure, par exemple une pression, un choc, une onde ou un champ, mécanique, électrique ou thermique, sur le système de stockage. Dans l'exemple de la figure 3, la sollicitation extérieure sur le système de stockage est un choc mécanique, schématisé par la référence 310, ou un choc électrique, schématisé par la référence 320. Cette sollicitation extérieure peut être commandée au moyen d'un déclencheur intégré au dispositif de réchauffage. Ce déclencheur, dont des exemples seront décrits par la suite, permet de générer, sur le système de stockage, une onde de choc qui a pour effet de modifier la répartition des molécules dans le matériau, faisant passer ledit matériau de l'état liquide à l'état solide. Ce déclencheur peut comporter, par exemple, un ressort piloté par un relais électromécanique, des électrodes connectées à une batterie basse tension ou tout autre moyen permettant de générer une action mécanique, thermique ou électrique sur le système de stockage.

Le déclencheur peut être relié, électriquement ou mécaniquement, au robinet 150 sur lequel est monté le dispositif de réchauffage 200. Ainsi, le déclencheur est commandé par l'utilisateur, à l'ouverture du robinet 150 et, notamment, à l'activation de la manette 159 de soutirage de l'eau chaude.

Quelle que soit le déclencheur utilisé, lorsque l'utilisateur veut soutirer de l'eau chaude, il active la manette 159 du robinet 150 de sorte à permettre l'écoulement de l'eau chaude. L'activation du déclencheur a pour effet de faire passer le matériau à changement de phase de son état liquide à son état solide, libérant ainsi l'énergie thermique (la chaleur) préalablement emmagasinée autour de la partie de la canalisation 135 située au sein du matériau à changement de phase. Cette libération de l'énergie thermique réchauffe l'eau restée dans les canalisations après le puisage précédent. L'eau ainsi réchauffée peut être soutirée jusqu'à ce que l'eau chauffée par le chauffe-eau 120 arrive au robinet 150. L'utilisateur reçoit donc de l'eau chaude - réchauffée par le système de stockage - dès l'ouverture du robinet.

Après le changement d'état, et sous l'effet de la chaleur dégagée pendant ledit changement d'état, la température du matériau à changement de phase augmente jusqu'à atteindre, et même dépasser, la température de fusion. Le matériau à changement de phase redevient donc liquide et, sous l'effet de la température ambiante, passe à nouveau dans son état de surfusion.

Un exemple de système de stockage 200a, représenté sur la figure 2, comporte un récipient 210, de préférence fermé, rempli du matériau à changement de phase 220. Le récipient 210 peut être thermiquement isolé afin que la chaleur produite ne soit pas diffusée hors du dispositif de réchauffage. Ce récipient 210 est fixé autour de la canalisation d'eau chaude 135 de sorte à ce qu'une partie de ladite canalisation 135 soit entourée du matériau à changement de phase 220. C'est cette partie de la canalisation 135 qui reçoit l'énergie thermique libérée par le changement d'état du matériau à changement de phase de sorte que l'eau circulant dans cette partie de canalisation soit réchauffée avant d'atteindre le robinet 150.

Dans certains modes de réalisation, la partie de la canalisation d'eau chaude située à l'intérieur du système de stockage 200a prend une forme sinueuse, formant par exemple un serpentin 230 tel que celui représenté sur la figure 2. Une telle forme sinueuse permet une plus grande surface d'échange thermique avec le matériau à changement de phase et donc un réchauffage optimal de l'eau restée dans les canalisations.

Un autre exemple de système de stockage 200c, représenté sur la figure 3, comporte un récipient 210 divisé en plusieurs cavités 250. Chaque cavité 250 est formée entre deux plaques de séparation 240 disposées sensiblement parallèlement les unes aux autres et formant des sortes d'ailettes au sein du récipient 210. Chaque cavité 250 est au moins partiellement remplie de matériau à changement de phase. Une telle structure interne du récipient 210 offre une répartition équilibrée du matériau à changement de phase, ce qui permet d'homogénéiser la température dudit matériau à changement de phase lors du changement d'état.

Dans une variante, le récipient 120 du système de stockage peut être isolé thermiquement de l'environnement extérieur. Cette variante permet de limiter la baisse de température du matériau à changement de phase due aux pertes dans l'air ambiant et de favoriser la restitution de la chaleur à l'eau en circulation.

Dans certains modes de réalisation, tels que celui représenté sur la figure 3, la partie de la canalisation d'eau chaude 135 située en intérieur du système de stockage 200c comporte plusieurs conduits 280 s'étendant longitudinalement à travers le récipient 210. Ces conduits 280, par exemple au nombre de 32, sont raccordés à chaque extrémité du récipient 210 sur la canalisation d'eau chaude 135 et assurent une plus grande surface d'échange thermique avec le matériau à changement de phase. Pour cela, chaque plaque de séparation 240 peut comporter des orifices traversants 260 permettant chacun la traversée d'un des conduits 280.

Dans certains modes de réalisation, le matériau à changement de phase peut être conditionné de façon à améliorer sa diffusivité, par exemple, par l'ajout de paillettes métalliques ou d'un treillis métallique qui présentent une forte conductivité thermique et une faible capacité thermique volumique.

L'homme du métier comprendra que le récipient à matériau à changement de phase et/ou la partie de la canalisation d'eau chaude située en intérieur du système de stockage peuvent prendre des formes et des dispositions différentes de celles décrites précédemment en fonction notamment de l'agencement et de la taille de l'installation sanitaire.

L'homme du métier comprendra en outre que les différents modes de réalisation qui viennent d'être décrits peuvent être combinés les uns avec les autres. Par exemple, une canalisation de forme sinueuse 230, comme celle du système de stockage 200a, peut être insérée au sein du système de stockage 200c et serpenter à travers les différentes cavités 250 via les orifices traversants 260. Selon un autre exemple, plusieurs conduits longitudinaux 280 du système de stockage 200c peuvent être insérés au sein du système de stockage 200a à la place de la canalisation de forme sinueuse 230.

Le dispositif de réchauffage selon l'invention peut être installé dans une installation sanitaire telle que celle décrite précédemment. Il peut également être monté dans des installations industrielles pour chauffer de l'eau ou tout autre fluide à des températures plus élevées ou, au contraire, plus basses que celles des installations sanitaires. Il peut être monté, par exemple, dans le circuit primaire d'une centrale solaire à concentration.

Le matériau à changement de phase présente une propriété de surfusion adaptée à la température d'utilisation du fluide et à la source de chaleur. Il présente une température de fusion adaptée à l'utilisation, mais nécessairement inférieure à la température de la source de chaleur (par exemple la chaudière ou la centrale solaire). Sa température de nucléation dépend également de l'usage et de l'utilisation. Par exemple, pour un usage en eau chaude sanitaire, la température de nucléation doit être inférieure à la température du logement y compris en période d'inoccupation. Par exemple, dans l'application à une installation sanitaire, le matériau à changement de phase utilisé dans le dispositif de réchauffage présente, de préférence, une température de fusion supérieure ou égale à 36°C et inférieure ou égale à 40°C. En effet, l'échange thermique au sein du système de stockage 200a, 200b ou 200c est pris en compte pour obtenir une température d'eau supérieure à 34°C et permettre la fusion du matériau à changement de phase pour une eau chaude à une température avoisinant les 42°C. Le système de stockage est calculé pour un débit de soutirage de l'ordre de 4 à 6 l/min. La température de nucléation est de préférence inférieure ou égale à 17°C afin que le matériau à changement de phase puisse être placé dans un état de surfusion. La température de nucléation doit permettre d'éviter que, une fois le matériau à changement de phase chargé en énergie thermique, l'énergie stockée ne soit restituée à l'ambiance du bâtiment - dont la température minimale peut être autour de 17°C - avant le prochain soutirage.

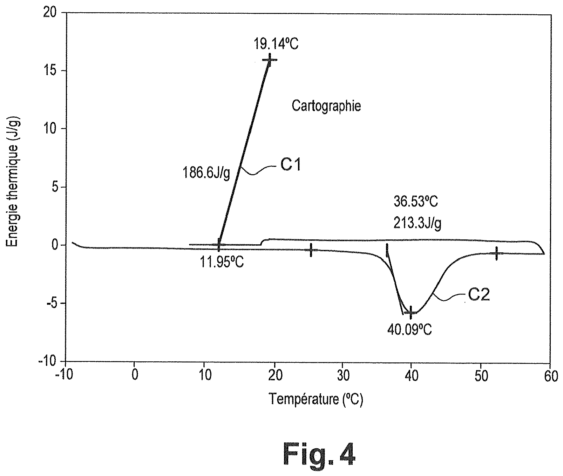

Un matériau particulièrement bien adapté à une application sanitaire est le Phosphate de Sodium hydraté. Ce matériau à changement de phase présente, en effet, une température de fusion de 36°C et une température de nucléation inférieure à 16°C. Un exemple de la variation du flux de chaleur en fonction de la température est représenté sur la figure 4, où la partie inclinée C1 de la courbe montre la production de chaleur lors de la solidification et la partie sinusoïdale C2 montre la recharge en énergie du matériau avec son point de fusion à environ 40°C. La ligne C1 sur la figure 4 montre la cinétique rapide du phénomène de cristallisation. Le DSC (« Differential Scanning Calorimetry » en termes anglo-saxons ou calorimètre à balayage différentiel) ne parvient pas à compenser le dégagement de chaleur accompagnant le changement d'état (gain de chaleur de 8°C avec la compensation du DSC).

Le système de stockage 200a, 200b, 200c du dispositif de réchauffage de l'invention est dimensionné pour contenir le volume et la masse de matériau à changement de phase ainsi que la dimension des surfaces d'échange entre ledit matériau à changement de phase et l'eau et, éventuellement, la quantité de matériau favorisant la diffusivité thermique, nécessaires à chauffer l'eau refroidie dans les canalisations.

Il a été calculé, pour le Phosphate de Sodium hydraté, que pour un volume d'eau refroidie de 2 litres dans les canalisations (ce qui correspond à un temps d'attente de 30 secondes pour un débit de 4l/min), l'énergie nécessaire pour réchauffer les 2 litres d'eau de 15°C à 36° est :

$$2 \times 4{,}19 \times (36 - 15) = 176 \text{ kJ,}$$

où 4,19 est la chaleur spécifique de l'eau. Compte tenu que la chaleur latente de fusion du Phosphate de Sodium hydraté est de 233kJ/kg et que sa masse volumique est de 1500kg/m$^3$, une masse de 755 g et un volume de 0,50 litre de matériau à changement de phase permet de réchauffer les 2 litres d'eau refroidie, dans les conditions énoncées ci-dessus.

D'autres matériaux à changement de phase peuvent bien entendu être choisis. Pour des applications eau chaude inférieure à 100°C, le MCP peut être tout sel hydraté, autre que le Phosphate de Sodium hydraté, ayant la propriété de surfusion ; ce peut être, par exemple de l'acétate de sodium hydraté. Pour des applications à une centrale solaire à concentration (CSP) ou des applications hautes températures, le matériau à changement de phase peut être des sels liquides tels que des sels de nitrates, carbonates ou chlorures possédant une propriété de surfusion, comme par exemple le mélange suivant : $LiNO_3$(25,9 wt%), $NaNO_3$(20,06 wt%) ou $KNO_3$(54,1%).

Les dimensions du récipient 210 recevant le matériau à changement de phase sont adaptées en fonction du volume et de la masse de matériau déterminés. Dans les exemples des figures 2 et 3, le récipient est un cylindre fermé de hauteur h et de diamètre d. L'homme du métier comprendra que le récipient peut prendre diverses formes (cubique, conique, etc.) optimisant l'insertion du dispositif de réchauffage autour des canalisations de l'installation sanitaire.

La consommation d'eau chaude variant d'une utilisation à une autre, le volume d'eau chaude en provenance du chauffe-eau 120 permettant de recharger en énergie thermique le matériau à changement de phase peut varier. Par exemple, le volume d'eau chaude à 40°C soutirée à un lave-main est en moyenne de 3,2 litres ; le volume d'eau chaude à 40°C soutirée pour une douche est en moyenne de 41 litres ; le volume d'eau chaude à 40°C soutirée à un évier de cuisine pour effectuer une vaisselle est en moyenne de 21,5 litres. Le volume d'eau refroidie soutirée avant que l'utilisateur ne puisse effectuer le lavage souhaité est de l'ordre de 1 litre pour le lavage de mains et de 2 litres pour la douche ou la vaisselle. Le nombre de litres d'eau chaude, par exemple à 42°C, nécessaire à recharger le matériau à changement de phase est de 4,3 litres pour le lave-main et de 8,5 litres pour la douche et la vaisselle. Ainsi, pour la plupart des usages, l'eau chaude provenant du chauffe-eau permet de recharger le matériau à changement de phase en énergie thermique de sorte qu'au puisage suivant ledit matériau à changement de phase soit à nouveau en état de surfusion et puisse à nouveau réchauffer l'eau refroidie dans les canalisations.

Dans les usages où le volume d'eau chaude est trop faible pour permettre de recharger le matériau à changement de phase en énergie thermique - par exemple un lave-main - alors deux système de stockages 200a, 200b peuvent être montés en série et le déclencheur de choc mécanique ou électrique commandé par intermittence, de sorte qu'un premier système de stockage est déclenché lors d'un puisage et que le deuxième système de stockage est déclenché lors du puisage suivant.

Dans certains modes de réalisation, les deux systèmes de stockage 200a, 200b peuvent être montés en série et sollicités simultanément, procurant ainsi une double surface d'échange thermique qui permet de réchauffer un plus grand volume d'eau refroidie dans les canalisations.

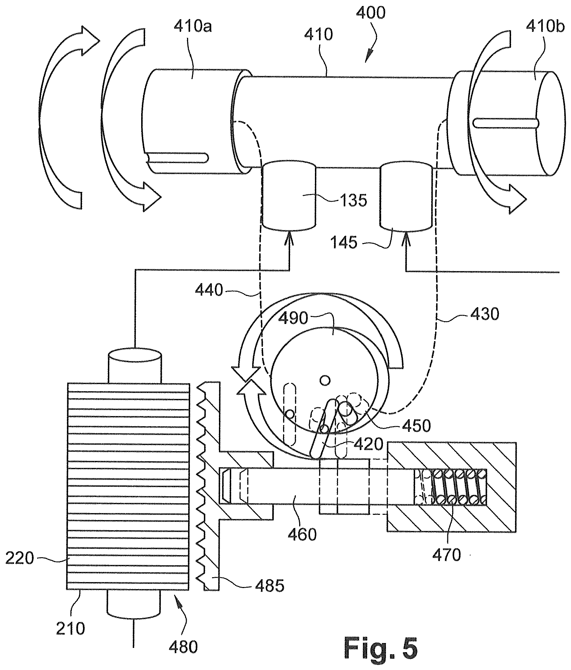

Comme mentionné précédemment, le déclencheur 400, 500 peut être relié, électriquement ou mécaniquement au robinet 150 sur lequel est monté le dispositif de réchauffage 200. Un exemple de déclencheur mécanique 400, permettant de produire mécaniquement la nucléation du matériau à changement de phase, est représenté sur la figure 5. Ce déclencheur mécanique 400 comporte, par exemple :

- un ensemble mitigeur 410 permettant de produire l'eau à la température désirée par mélange entre l'eau chaude et l'eau froide, cet ensemble mitigeur comprenant une manette 410a de soutirage et de réglage du débit d'eau et une manette 410b de réglage de la température d'eau désirée,
- une première liaison mécanique 440, par exemple un câble flexible gainé, reliant la manette 410a de soutirage à une aube mobile 420,
- une deuxième liaison mécanique 430, par exemple un câble flexible gainé, reliant la manette 410b de réglage de la température d'eau désirée à une butée débrayable 450 empêchant la rotation de l'aube mobile 420 autour de son axe dans une direction,

- un marteau 460 muni d'un épaulement sur lequel vient s'appuyer l'aube mobile 420,
- un ressort 470 pour transmettre l'énergie nécessaire au matériau à changement de phase 220 par l'intermédiaire du marteau 460 et de l'échangeur eau/matériau à changement de phase 480 constitué, par exemple de matériau à changement de phase et de serpentins 230 ou de plaques 240,
- une roue 490 sur laquelle sont montées l'aube mobile 420 et la butée débrayable 450,
- des tuyauteries permettant de relier l'échangeur 480 avec le mitigeur 410, et
- dans certaines variantes, une plaque de répartition 485 permettant de transmettre le choc du marteau 460 sur l'ensemble de l'échangeur 480 contenant le matériau à changement de phase.

Le déclencheur 400 peut comporter, en outre, un boîtier dans lequel sont logés le marteau 460, le ressort 470, l'aube mobile 420, la butée débrayable 450, la roue 490 ainsi que, éventuellement, la plaque de répartition 485 et l'échangeur 480.

La demande d'eau chaude pour une température désirée suffisante (butée embrayée) avec la rotation de la manette 410a de soutirage met en mouvement la roue 490 et donc l'aube mobile 420 à l'aide du câble flexible 440, ce qui entraîne le déplacement du marteau 460 pour comprimer le ressort 470. L'aube mobile 420 s'appuie sur l'épaulement du marteau 460 et la butée débrayable 450 jusqu'à ce que sa trajectoire lui permette de quitter l'épaulement, libérant ainsi l'énergie du ressort. Le marteau 460 vient alors heurter l'échangeur 480 renfermant le matériau à changement de phase 220, par exemple par l'intermédiaire de la plaque de répartition 485, déclenchant ainsi sa nucléation. Lorsque l'utilisateur referme la manette 410a de soutirage, l'aube mobile 420 reprend sa place initiale grâce à sa mobilité autour de son axe. Elle est réarmée pour le prochain déclenchement.

Généralement, la température réglée est laissée à une valeur supérieure à 30°C. Toutefois, en cas de demande d'eau à une température inférieure à une valeur prédéfinie (par exemple 28°C), et si l'utilisateur manœuvre en premier la manette 410a de soutirage avant de modifier le réglage de la température désirée, alors la manœuvre de la manette 410b de réglage de la température permet de déplacer, ou débrayer, la butée 450 dans son logement, empêchant l'aube mobile 420 d'entraîner le marteau 460 et de comprimer le ressort 470. Lorsque l'utilisateur modifie le réglage pour une température d'eau désirée plus chaude, la butée débrayable 450 reprend sa place mais la prise en compte de l'information ne sera réalisée qu'après la fermeture de la manette 410a de soutirage qui permet le basculement de l'aube mobile en position «armée» pour comprimer le ressort 470.

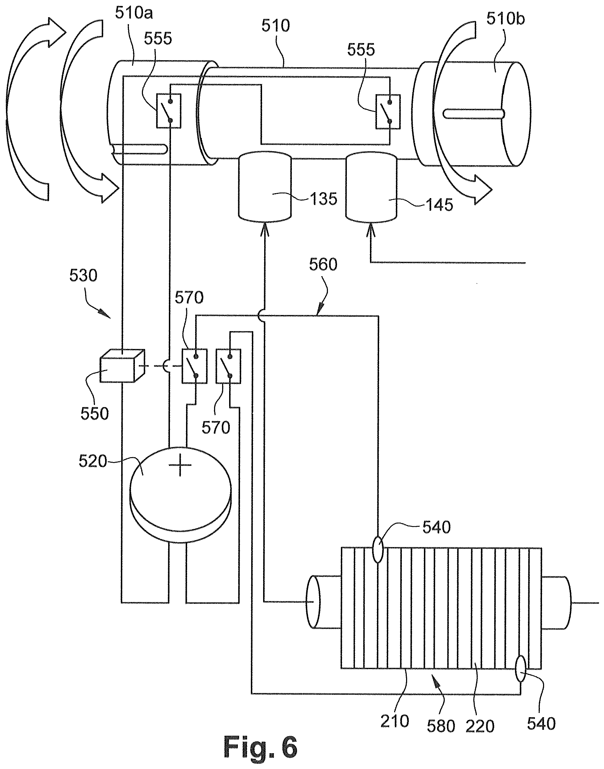

Un exemple de déclencheur électrique 500, permettant de produire électriquement la nucléation du matériau à changement de phase, est représenté sur la figure 6. Ce déclencheur électrique 500 comporte, par exemple :

- un ensemble mitigeur 510 permettant de produire l'eau à la température désirée par mélange entre l'eau chaude et l'eau froide, cet ensemble mitigeur comprenant une manette 510a de soutirage et de réglage du débit d'eau et une manette 510b de réglage de la température d'eau désirée ;
- une source de tension 520 à très basse tension de sécurité (TBTS par exemple inférieure ou égale à 12V en courant continu ou en courant alternatif) comme, par exemple, une batterie, un transformateur de sécurité, un convertisseur électronique sur le courant du secteur ou un panneau solaire photovoltaïque délivrant une très basse tension de sécurité (TBTS < 12 V). Lorsque la source de tension est une batterie, celle-ci peut être d'un type standard, facilement accessible et interchangeable. Les autres sources de tension sont de préférence installées en extérieure du dispositif de réchauffage 200 et suffisamment éloignées du point de puisage d'eau ;
- des tuyauteries permettant de relier le mitigeur 510 et l'échangeur eau/matériau à changement de phase 580 constitué, par exemple de matériau à changement de phase et de serpentins 230 ou de plaques 240 ;
- au moins deux électrodes 540 disposées sur le récipient 210 de l'échangeur 580 pour communiquer la tension TBTS au matériau à changement de phase 220 ;
- un relais électromécanique 550 temporisé à la mise sous tension, alimenté par la source de tension 520 et commandant la fermeture d'interrupteurs 570 alimentant les électrodes 540. L'alimentation de ce relais électromécanique (en particulier de la bobine du relais électromécanique) est autorisée par les deux interrupteurs 570 fermés lorsque le débit de soutirage est suffisant et lorsque la température désirée est suffisante (par exemple 28°C), suivant l'usage du point d'utilisation (douche, lavabo, évier...) ;
- un premier circuit électrique 530 reliant la source de tension 520 à des contacts magnétiques 555, montés sur chacune des manettes 510a de soutirage et 510b de réglage de la température d'eau, et au relais électromécanique 550 temporisé. Ces contacts magnétiques 555 sont fermés au passage devant des aimants ou des bobines intégrées aux manettes ;
- un deuxième circuit électrique 560 reliant la source de tension 520 aux électrodes 540, via les interrupteurs 570. Ce deuxième circuit 560 est ouvert en amont des électrodes 540 par deux contacts du même relais électromécanique 550 temporisé.

Le déclencheur 500 peut comporter, en outre, un boîtier dans lequel sont logés la source de tension lorsque celle-ci est une batterie, et une partie au moins des circuits électriques de liaison 530, 560 de sorte à les protéger. L'échangeur 580 et ses électrodes 540 peuvent également être logés dans ce boîtier.

Pour que la nucléation du matériau à changement de phase 220 soit déclenchée électriquement, il faut simplement une double condition qui se traduit par la fermeture des deux interrupteurs 570 alimentant les électrodes 540 disposées sur l'échangeur 580 : une température d'eau désirée suffisante et un soutirage demandé. La temporisation débute à la mise sous tension du relais électromécanique 550 et dure le temps nécessaire à la nucléation du matériau à changement de phase. A la fin du temps de temporisation, les interrupteurs 570 s'ouvrent, ce qui permet au matériau à changement de phase d'être rechargé en prévision du prochain soutirage.

Avec un déclencheur électrique comme celui de la figure 6, le dispositif de réchauffage fonctionne aussi longtemps que l'énergie électrique nécessaire est disponible.

Bien que décrit à travers un certain nombre d'exemples, variantes et modes de réalisation, le dispositif de réchauffage selon l'invention comprend divers variantes, modifications et perfectionnements qui apparaîtront de façon évidente à l'homme du métier, étant entendu que ces variantes, modifications et perfectionnements font partie de la portée de l'invention.

## Revendications

**1.** Dispositif de réchauffage (200) d'un fluide circulant dans au moins une canalisation (131, 133, 135) pouvant raccorder un point source de fluide (120) à au moins un point d'utilisation (150) dudit fluide, comportant, en amont du point d'utilisation (150), au moins un système de stockage comportant un matériau à changement de phase (200a, 200b, 200c) présentant une propriété de surfusion adaptée à une température d'utilisation du fluide de sorte à emmagasiner une énergie thermique captée lors d'une utilisation du fluide et à restituer au fluide, au cours d'une utilisation suivante, l'énergie thermique précédemment emmagasinée, ledit matériau à changement de phase (220) étant liquide en-dessous d'une température de fusion et se solidifiant lors de l'utilisation suivante,
**caractérisé en ce qu'**il comporte un déclencheur électrique ou mécanique commandé par un utilisateur, le déclencheur générant une onde de choc apte à faire passer le matériau à changement de phase d'un état liquide en surfusion à un état solide.

**2.** Dispositif de réchauffage d'un fluide selon la revendication 1, **caractérisé en ce que** le système de stockage (200ca, 200b, 200c) comporte un récipient (210) contenant le matériau à changement de phase (220), ledit récipient étant configuré de sorte à être en contact thermique avec au moins une canalisation de transport du fluide chaud.

**3.** Dispositif de réchauffage d'un fluide selon la revendication 2, **caractérisé en ce que** le récipient (210) comporte une pluralité de plaques de séparation (240), disposées sensiblement parallèlement les unes aux autres et formant une pluralité de cavités (250) contenant chacune une portion d'un matériau à changement de phase.

**4.** Dispositif de réchauffage d'un fluide selon la revendication 3, **caractérisé en ce que** le matériau à changement de phase contenu dans les cavités (250) est un matériau dopé ou non par des matériaux plus conducteurs thermiquement ou par l'insertion d'une maille ou d'un treillis métallique conducteur.

**5.** Dispositif de réchauffage d'un fluide selon l'une quelconque des revendications 2 à 4, **caractérisé en ce que** le récipient (210) est monté autour de plusieurs conduits (280) s'étendant longitudinalement au sein du matériau à changement de phase et raccordés chacun sur la canalisation de transport du fluide chaud (135).

**6.** Dispositif de réchauffage d'un fluide selon l'une quelconque des revendications 2 à 5, **caractérisé en ce que** le récipient (210) contenant le matériau à changement de phase est thermiquement isolé de l'environnement extérieur.

**7.** Dispositif de réchauffage d'un fluide selon l'une quelconque des revendications 1 à 6, **caractérisé en ce que** le matériau à changement de phase (220) est un Phosphate de Sodium hydraté.

**8.** Dispositif de réchauffage d'un fluide selon l'une quelconque des revendications 1 à 7, **caractérisé en ce qu'**il comporte au moins deux systèmes de stockage (200a, 200b) raccordés en série.

**9.** Installation thermique (100) destinée à équiper un bâtiment, comportant au moins une canalisation de transport d'un fluide (135) et au moins un point d'utilisation (150) dudit fluide,
**caractérisée en ce qu'**elle comporte au moins un dispositif de réchauffage du fluide (200) selon l'une quelconque des revendications 1 à 8, dans lequel le déclencheur est relié électriquement ou mécaniquement au point d'utilisation (150) du fluide.

**10.** Installation thermique selon la revendication 9, **caractérisée en ce que** chaque point d'utilisation (150), équipé d'un dispositif de réchauffage du fluide, comporte un appareil de limitation de la température du fluide.

**11.** Installation thermique selon l'une quelconque des revendications 9 et 10, **caractérisée en ce que** le point d'utilisation (150) comporte un dispositif d'activation du déclencheur.

**12.** Installation thermique selon l'une quelconque des revendications 9 à 11, **caractérisée en ce que** le point source de fluide (120) est un chauffe-eau ou une chaudière.

**Patentansprüche**

**1.** Heizvorrichtung (200) einer in wenigstens einer Kanalisation (131, 133, 135) umlaufenden Flüssigkeit, die einen Quellpunkt der Flüssigkeit (120) an wenigstens einen Nutzungspunkt (150) der genannten Flüssigkeit anschließen kann,
vor dem Nutzungspunkt (150) wenigstens ein Speichersystem umfassend, das ein Material mit Phasenänderung (200a, 200b, 200c) umfasst, das eine Unterkühlungseigenschaft aufweist, die an eine Nutzungstemperatur der Flüssigkeit derart angepasst ist, dass eine thermische Energie gespeichert ist, die bei einer Nutzung der Flüssigkeit erfasst ist und im Verlauf einer nachfolgenden Nutzung die zuvor gespeicherte thermische Energie an die Flüssigkeit zurückgegeben ist, wobei das genannte Material mit Phasenänderung (220) unterhalb einer Schmelztemperatur flüssig ist und sich bei der nachfolgenden Nutzung verfestigt,
**dadurch gekennzeichnet, dass** sie einen elektrischen oder mechanischen Auslöser umfasst, der von einem Nutzer gesteuert ist, wobei der Auslöser eine Schockwelle erzeugt, die geeignet ist, das Material mit Phasenänderung von einem flüssigen Zustand in Unterkühlung in einen festen Zustand übergehen zu lassen.

**2.** Heizvorrichtung einer Flüssigkeit gemäß Anspruch 1, **dadurch gekennzeichnet, dass** das Speichersystem (200ca, 200b, 200c) einen Behälter (210) umfasst, der das Material mit Phasenänderung (220) enthält, wobei der genannte Behälter derart ausgestaltet ist, dass er mit wenigstens einer Kanalisation zum Transport der heißen Flüssigkeit in thermischem Kontakt ist.

**3.** Heizvorrichtung einer Flüssigkeit gemäß Anspruch 2, **dadurch gekennzeichnet, dass** der Behälter (210) eine Vielzahl von Trennplatten (240) umfasst, die deutlich parallel zueinander angeordnet sind und eine Vielzahl von Ausnehmungen (250) formen, die jeweils einen Abschnitt eines Materials mit Phasenänderung enthalten.

**4.** Heizvorrichtung einer Flüssigkeit gemäß Anspruch 3, **dadurch gekennzeichnet, dass** das Material mit Phasenänderung, das in den Ausnehmungen (250) enthalten ist, ein Material ist, das durch thermisch leitfähigeres Material oder durch das Einfügen einer Masche oder eines leitenden Metallgitters gedopt oder nicht gedopt ist.

**5.** Heizvorrichtung einer Flüssigkeit gemäß irgendeinem der Ansprüche 2 bis 4, **dadurch gekennzeichnet, dass** der Behälter (210) um mehrere Leitungen (280) montiert ist, die sich in Längsrichtung innerhalb des Materials mit Phasenänderung erstrecken und jeweils auf der Kanalisation zum Transport der heißen Flüssigkeit (135) angeschlossen sind.

**6.** Heizvorrichtung einer Flüssigkeit gemäß irgendeinem der Ansprüche 2 bis 5, **dadurch gekennzeichnet, dass** der Behälter (210), der das Material mit Phasenänderung enthält, von der äußeren Umgebung thermisch isoliert ist.

**7.** Heizvorrichtung einer Flüssigkeit gemäß irgendeinem der Ansprüche 1 bis 6, **dadurch gekennzeichnet, dass** das Material mit Phasenänderung (220) ein hydratisiertes Natriumphosphat ist.

**8.** Heizvorrichtung einer Flüssigkeit gemäß irgendeinem der Ansprüche 1 bis 7, **dadurch gekennzeichnet, dass** sie wenigstens zwei in Serie angeschlossene Speichersysteme (200a, 200b) umfasst.

**9.** Thermische Anlage (100), die zum Ausrüsten eines Gebäudes bestimmt ist, das wenigstens eine Kanalisation zum Transport einer Flüssigkeit (135) und wenigstens einen Nutzungspunkt (150) der genannten Flüssigkeit umfasst, **dadurch gekennzeichnet, dass** sie wenigstens eine Heizvorrichtung der Flüssigkeit (200) gemäß irgendeinem der Ansprüche 1 bis 8 umfasst, bei der der Auslöser elektrisch oder mechanisch am Nutzungspunkt (150) der Flüssigkeit angeschlossen ist.

**10.** Thermische Anlage gemäß Anspruch 9, **dadurch gekennzeichnet, dass** jeder Nutzungspunkt (150), der mit einer Heizvorrichtung der Flüssigkeit ausgerüstet ist, ein Gerät zur Begrenzung der Temperatur der Flüssigkeit umfasst.

**11.** Thermische Anlage gemäß irgendeinem der Ansprüche 9 und 10, **dadurch gekennzeichnet, dass** der Nutzungspunkt (150) eine Aktivierungsvorrichtung des Auslösers umfasst.

**12.** Thermische Anlage gemäß irgendeinem der Ansprüche 9 bis 11, **dadurch gekennzeichnet, dass** der Quellpunkt der Flüssigkeit (120) ein Heißwasserbereiter oder ein Heizkessel ist.

**Claims**

1. Device for heating (200) a fluid flowing in at least one pipe (131, 133, 135) able to connect a source point of fluid (120) to at least one point of use (150) of said fluid, comprising, upstream from the point of use (150), at least one storage system comprising a phase-change material (200a, 200b, 200c) that has a supercooling property adapted to a service temperature of the fluid in such a way as to store a thermal energy captured during a use of the fluid and to restore to the fluid, during a following use, the previously stored thermal energy, said phase-change material (220) being liquid below a melting temperature and solidifying during the following use, **characterised in that** it comprises an electrical or mechanical trigger controlled by a user, with the trigger generating a shockwave able to change the phase-change material from a supercooled liquid state to a solid state.

2. Device for heating a fluid according to claim 1, **characterised in that** the storage system (200a, 200b, 200c) comprises a container (210) that contains the phase-change material (220), said container being configured in such a way as to be in thermal contact with at least one transport pipe of the hot fluid.

3. Device for heating a fluid according to claim 2, **characterised in that** the container (210) comprises a plurality of separation plates (240), arranged substantially parallel to one another and forming a plurality of cavities (250) with each one containing a portion of a phase-change material.

4. Device for heating a fluid according to claim 3, **characterised in that** the phase-change material contained in the cavities (250) is a material that is doped or not by more thermally conductive materials or by the insertion of a mesh or of a conductive wire mesh.

5. Device for heating a fluid according to any of claims 2 to 4, **characterised in that** the container (210) is mounted around several ducts (280) extending longitudinally within the phase-change material and each one connected to the transport pipe of the hot fluid (135).

6. Device for heating a fluid according to any of claims 2 to 5, **characterised in that** the container (210) that contains the phase-change material is thermally insulated from the outside environment.

7. Device for heating a fluid according to any of claims 1 to 6, **characterised in that** the phase-change material (220) is a hydrated Sodium Phosphate.

8. Device for heating a fluid according to any of claims 1 to 7, **characterised in that** it comprises at least two storage systems (200a, 200b) connected in series.

9. Thermal installation (100) intended to equip a building, comprising at least one transport pipe of a fluid (135) and at least one point of use (150) of said fluid, **characterised in that** it comprises at least one device for heating the fluid (200) according to any of claims 1 to 8, wherein the trigger is electrically or mechanically connected to the point of use (150) of the fluid.

10. Thermal installation according to claim 9, **characterised in that** each point of use (150), equipped with a device for heating the fluid, comprises an apparatus for limiting the temperature of the fluid.

11. Thermal installation according to any of claims 9 and 10, **characterised in that** the point of use (150) comprises a device for activating the trigger.

12. Thermal installation according to any of claims 9 to 11, **characterised in that** the source point of fluid (120) is a water heater or a boiler.

**Fig. 1**

Fig. 3

Fig. 2

**Fig.4**

**Fig. 5**

**Fig. 6**

## RÉFÉRENCES CITÉES DANS LA DESCRIPTION

**Documents brevets cités dans la description**

- WO 9834073 A1
- FR 3043187 A1
- GB 2516953 A
- WO 2009065182 A1
- DE 102009013320 A1
- GB 2495938 A